Europäisches Patentamt

European Patent Office

Office européen des brevets

(11) Numéro de publication: **0 258 083 B1**

# FASCICULE DE BREVET EUROPEEN

(45) Date de publication de fascicule du brevet: **18.03.92** (51) Int. Cl.5: **A01D  41/14**

(21) Numéro de dépôt: **87401655.3**

(22) Date de dépôt: **15.07.87**

(54) **Engreneur pour machine du type moissonneuse-batteuse.**

(30) Priorité: **06.08.86 FR 8611650**

(43) Date de publication de la demande:
**02.03.88 Bulletin  88/09**

(45) Mention de la délivrance du brevet:
**18.03.92 Bulletin  92/12**

(84) Etats contractants désignés:
**BE DE FR GB IT**

(56) Documents cités:
**FR-A- 1 483 739**
**US-A- 3 139 718**
**US-A- 3 193 995**
**US-A- 3 681 901**
**US-A- 3 794 046**

(73) Titulaire: **Sionneau, Patrick**
**rue Saint-Martin**
**Villeromain F-41100 Vendome(FR)**

(72) Inventeur: **Sionneau, Patrick**
**rue Saint-Martin**
**Villeromain F-41100 Vendome(FR)**

(74) Mandataire: **Flavenot, Bernard**
**Société ABRITT 17, rue du Docteur Charcot**
**La Norville**
**F-91290 Arpajon(FR)**

# Description

La présente invention concerne les engreneurs pour machines du type moissonneuse-batteuse comme celles qui sont couramment utilisées dans le domaine de l'agriculture lors des récoltes de blé, orge ou toute autre plante comportant essentiellement une tige verticale avec, éventuellement, à son sommet, une partie plus ou moins volumineuse, par exemple en forme d'épi.

Traditionnellement, les moissonneuses-batteuses possèdent des moyens de coupe constitués par une lame de scie placée dans des doigts de coupe, pour assurer la coupe des céréales, puis une vis d'alimentation de grand diamètre à deux pas inversés afin de guider les plantes coupées à droite et à gauche vers l'entrée d'un convoyeur qui alimente un batteur. L'inconvénient de ce système est que la partie de la récolte qui est coupée dans l'axe de l'entrée du convoyeur arrive directement dans l'espace libre entre les deux spirales de la vis d'alimentation. De plus, cette partie de la récolte est constituée d'un ensemble de plantes relativement hautes et parfois barbues. Elles ne peuvent donc pas pénétrer facilement, et surtout de façon fluide, dans l'entrée du convoyeur, du fait aussi de l'arrivée des plantes coupées latéralement, amenées par les deux vis d'alimentation. Le passage des plantes est rendu très difficile, et ce passage est même parfois bloqué. Plus les récoltes sont denses, plus ce phénomène s'accentue. Il se produit alors un bourrage appelé "bouquet" qui interdit tout fonctionnement de la machine sans une intervention de son conducteur.

Un bourrage relativement permanent oblige alors le chauffeur à conduire sa machine à des vitesses très faibles, surtout, actuellement, du fait des rendements élevés que l'on obtient en agriculture, et ce pour éviter que la machine n'avance par à-coups avec le risque de casse de pièces ou d'organes, courroies, chaînes, variateur, etc.

Pour pallier en partie cet inconvénient, les constructeurs ont été obligés de donner aux moteurs de ces machines une puissance plus grande, d'où une consommation de gazole plus importante.

Il arrive aussi que, devant ce bourrage, la machine ne puisse plus couper les récoltes et que les plantes à couper se couchent et passent sous la machine, ce qui constitue une perte pour l'exploitant.

Le dispositif décrit dans le Brevet US-A-3 681 901 vise à diriger le flux des tiges des planter qui se présente devant la moissonneuse vers les deux chaînes de coupe et éviter que ces tiges ne viennent s'intercaler entre les extrémités des deux chaînes. Cependant, ce dispositif ne permet en aucune façon d'éviter le bourrage qui peut se produire à l'entrée des moyens de battage.

La présente invention a pour but de réaliser un engreneur de coupe de plantes pour moissonneuses-batteuses, qui soit d'une réalisation des plus simples, facile à coupler avec ces machines, qui élimine les inconvénients mentionnés ci-dessus en permettant d'éviter le bourrage à l'entrée du convoyeur, et qui permette à ces machines de se déplacer à une vitesse plus grande, plus régulière, pour contribuer à une augmentation du rendement de coupe et de leur durée de vie, par rapport à ceux des machines ne comportant pas un engreneur selon l'invention.

Plus précisément, la présente invention a pour objet un engreneur pour machine comme une moissonneuse, éventuellement batteuse, apte à se déplacer suivant une direction d'avance et à couper des tiges de plantes dont le port est sensiblement vertical, ladite machine comportant des moyens de coupe desdites tiges suivant une ligne faisant un angle non nul avec ladite direction d'avance, des moyens pour rassembler les tiges coupées, les déplacer dans un flux suivant une direction faisant un angle non nul avec ladite direction d'avance et les amener à une bouche d'entrée de traitement, ledit engreneur comportant en outre des moyens pour décaler latéralement un ensemble des tiges se trouvant devant ladite bouche d'entrée et des moyens pour guider ledit flux complété par ledit ensemble de tiges décalées vers ladite bouche d'entrée, cesdits moyens de déclage étant constitués par une première paroi définie sensiblement dans un plan dans lequel sont sensiblement disposées les tiges des plantes à couper, ledit plan faisant un angle aigu par rapport à ladite direction d'avance,

ledit engreneur étant caractérisé par le fait qu'il comporte en outre des moyens pour incliner lesdites tiges décalées suivant une orientation sensiblement dans la direction du déplacement dudit flux et pour les envoyer sur ledit flux avant son entrée dans ladite bouche d'entrée, cesdits moyens d'inclinaison des tiges étant constitués par une deuxième paroi continuant ladite première paroi et prenant progressivement une inclinaison par rapport à la direction dudit plan de ladite première paroi, en s'écartant de l'axe de la direction d'avance.

D'autres caractéristiques et avantages de la présente invention apparaîtront au cours de la présente description donnée en regard des dessins annexés à titre illustratif mais nullement limitatif dans lesquels :

- la figure 1 représente, vue de dessus, une moissonneuse-batteuse comportant un engreneur conforme à l'invention,
- les figures 2 à 4 représentent en perspective différentes vues d'un mode de réalisation d'un engreneur selon l'invention,
- les figures 5 et 6 représentent des vues permettant d'expliciter le fonctionnement et les avantages de l'engreneur selon les figures 1 à 4, et

- les figures 7 et 8 représente respectivement deux autres modes de réalisation d'un engreneur selon l'invention.

Il est tout d'abord précisé que, dans la présente description, les mêmes références désignent les même éléments quelles que soient les figures sur lesquelles elles apparaissent.

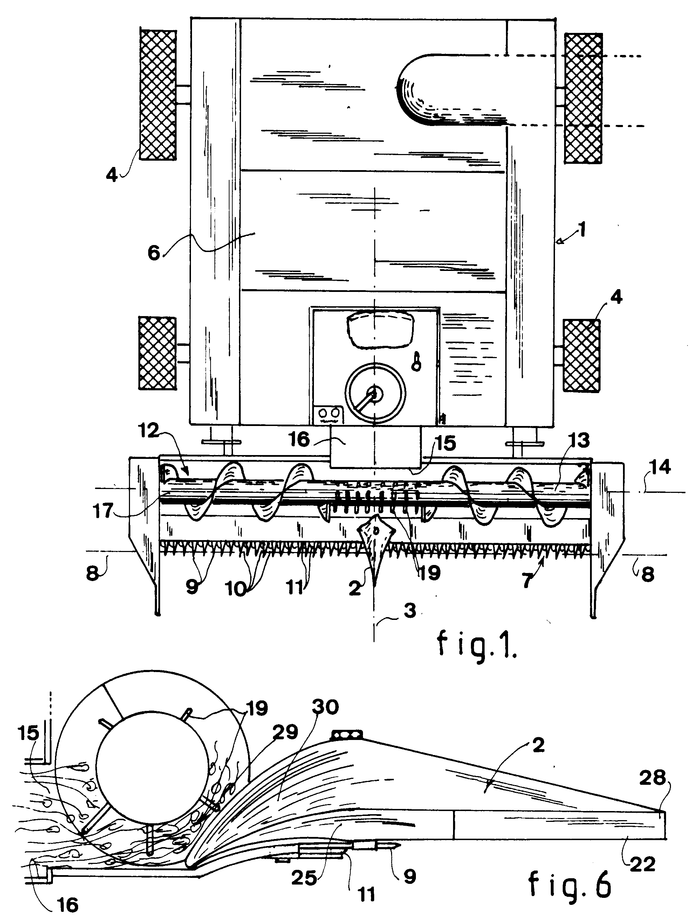

La figure 1 représente, sous forme relativement simplifiée et à titre d'exemple d'application, une machine agricole 1 comme une moissonneuse-batteuse, ensileuse, ... comportant un engreneur 2.

La moissonneuse-batteuse 1 est plus particulièrement adaptée pour la coupe et le traitement de battage de plantes comportant une tige se tenant dans une position sensiblement verticale comme le blé, l'orge, le seigle, l'avoine, etc. Cette machine est apte à se déplacer suivant une direction de propagation 3, par exemple sur des roues 4 commandées par un moteur contenu dans la carrosserie 6. La moissonneuse 1 comporte des moyens permettant de dissocier les plantes du sol dans lequel elles sont plantées, que ces moyens soient des moyens de coupe 7 des tiges comme illustré, ou tout autre, par exemple pour le ramassage des tiges déjà coupées. Ces moyens sont tels qu'ils agissent suivant une ligne 8 faisant un angle non nul avec la direction de propagation 3, par exemple perpendiculaire à cette direction.

Les moyens 7 illustrés sont constitués par des doigts 9 définissant des espaces de guidage et de maintien 10 associés à une lame coupante 11 dentée qui peut être animée d'un mouvement d'oscillations alternatif, pour passer alternativement dans les espaces 10 et couper les tiges qui s'y trouvent emprisonnées. Bien entendu, ces éléments n'ont été donnés qu'à titre d'exemple de réalisation des moyens permettant de dissocier les plantes du sol sur lequel elles se sont développées.

La moissonneuse comprend aussi des moyens 12 pour rassembler les tiges coupées par cette lame suivant la ligne 8 et les déplacer suivant un flux 13 ayant une direction 14 faisant un angle non nul avec la direction de propagation 3, cet angle étant en général le même que celui que fait la ligne de coupe 8 avec la direction de propagation 3. Ces moyens 12 permettent d'amener les tiges coupées à une bouche d'entrée 15 de traitement qui est généralement celle d'un convoyeur 16 qui conduit les plantes coupées vers un lieu de traitement, par exemple la batteuse.

Ces moyens 12 sont généralement constitués par une vis sans fin 17 comportant, sur sa périphérie, des parois 18 formant spirale pour canaliser le flux 13 des plantes coupées et le pousser vers l'entrée 15. Dans l'exemple illustré, l'entrée du convoyeur est située au milieu de la ligne de coupe et, dans ce cas, la machine comporte deux vis sans fin situées de part et d'autre de cette bouche 15 et à pas inversés. Devant l'entrée 15, la vis 17 comporte des ergots rétractables 19 permettant de pousser le flux dans la bouche 15 et le convoyeur 16. Ces ergots étant connus, ils ne seront pas plus amplement décrits ici.

L'engreneur 2 est monté en coopération avec les moyens de coupe de façon qu'il soit sensiblement dans l'axe de la bouche 15 pris suivant la direction de propagation 3 de la machine.

Il comporte une première partie constituée par des moyens 21 pour décaler latéralement un ensemble de tiges se trouvant dans l'axe de la bouche d'entrée 15, cet axe étant en général disposé suivant la direction de propagation 3 de la machine. Ces moyens sont constitués par une paroi 22 définie sensiblement dans un plan dans lequel sont généralement situées les tiges des plantes à couper, c'est-à-dire, en fait, un plan vertical par rapport au sol, ce plan faisant un angle aigu 23 par rapport à la direction de propagation 3.

Faisant suite à ces premiers moyens 21, l'engreneur comprend des moyens 24 pour incliner les tiges qui ont été décalées, vers et dans le sens du déplacement du flux 13, et pour les envoyer sur ce flux avant son entrée dans la bouche 15. Avantageusement, les tiges de l'ensemble sont coupées par les moyens de coupe 7 en même temps qu'elles sont inclinées. Dans une forme avantageuse de réalisation, ces moyens d'inclinaison des tiges sont constitués par une paroi 25 continuant la paroi 22 mais en prenant progressivement une inclinaison par rapport au plan de celle-ci, tout en continuant à s'écarter de l'axe de la direction de propagation 3.

L'engreneur comporte ensuite des moyens 26 pour guider le flux complété par l'ensemble de tiges décalées, inclinées et coupées vers la bouche d'entrée 15. Ces moyens sont constitués par une paroi de guidage 27 partant du point de la surface 25 permettant l'inclinaison le plus éloigné de la direction 3, pour se terminer vers la bouche d'entrée sensiblement sur l'axe passant par le sommet 28 de la surface 22 et parallèle à la direction 3. Cette paroi de guidage forme avec la vis sans fin un entonnoir 29 pour guider le flux 13 vers la bouche 15. Avantageusement, en donnant à cette surface une forme renflée convexe 30, elle constitue des moyens de compression du flux 13 des plantes coupées avant qu'il ne rentre dans la bouche 15, pour en réduire le volume transversal et donc, de ce fait, faciliter sa pénétration dans cette bouche.

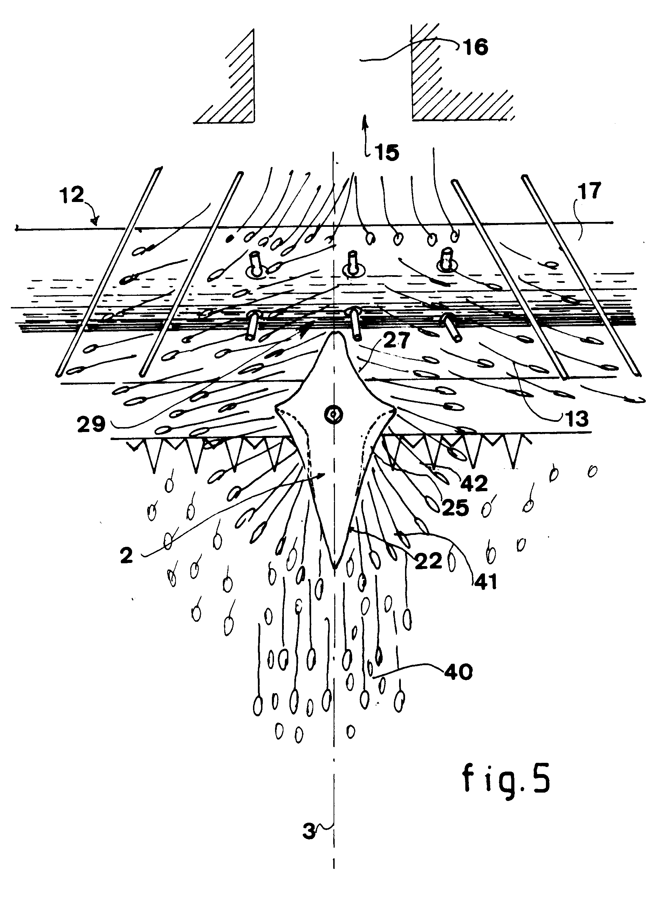

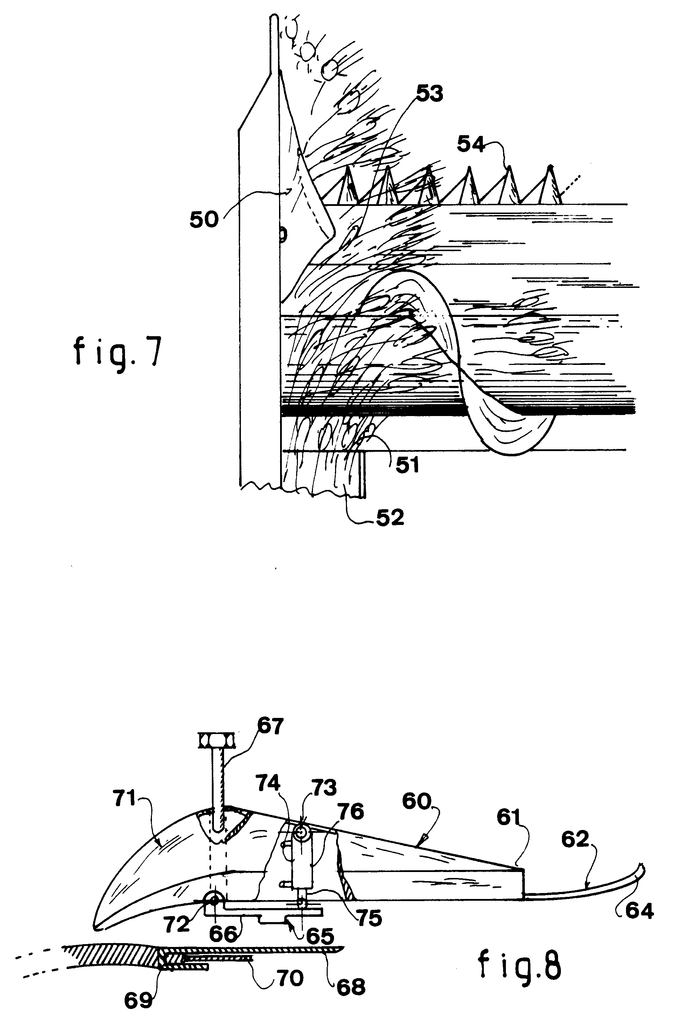

L'engreneur 2 en coopération avec la machine 1 fonctionne de la façon suivante, en précisant que ce fonctionnement est plus particulièrement décrit en regard des figures 5 et 6:

L'ensemble des plantes 40 qui se trouvent sensiblement dans l'axe de la bouche 15 est d'abord dévié en 41, par la partie déflectrice 21, puis ensuite incliné en 42 pour être envoyé en superposition sur le flux 13 de plantes coupées qui arrive poussé par le vis sans fin 17. Bien entendu, les plantes inclinées en 42 sont aussi coupées avec une grande régularité en même temps que celles qui proviennent de la vis d'alimentation des moyens de coupe. Par sa partie arrière constituée par le déflecteur-compresseur 26, le flux complété avec l'ensemble des tiges qui ont été déviées et inclinées est introduit dans la bouche 15, en étant au moins partiellement comprimé par l'action des ergots rétractables 19, cette introduction se faisant sans à-coups puisque les deux parties de céréales sont relativement comprimées et donc occupent moins de volume que si elles arrivaient, comme dans l'art antérieur, directement en regard de la bouche 15.

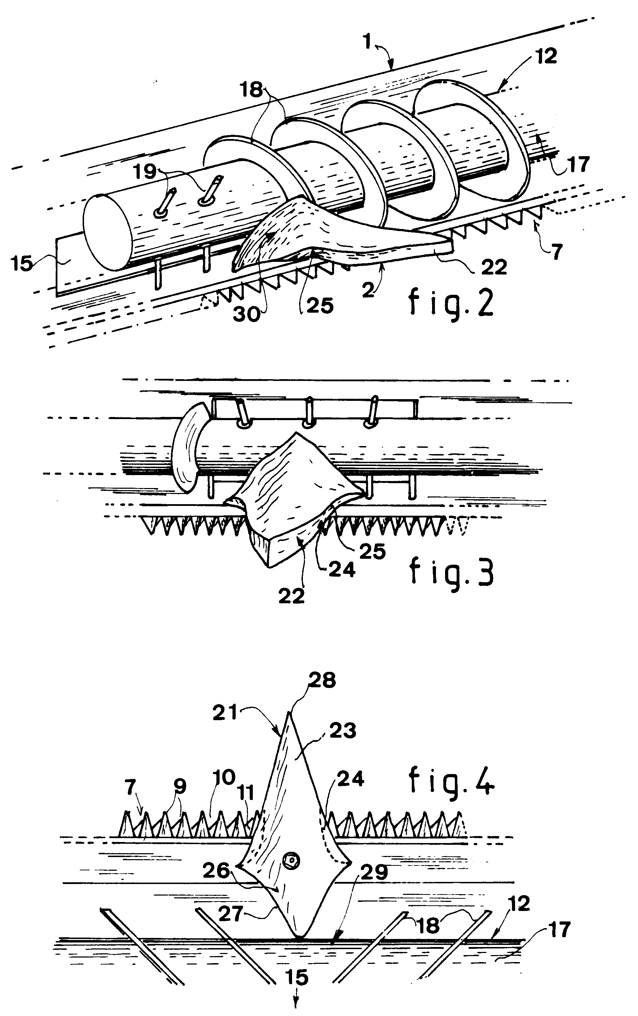

Dans l'exemple donné ci-dessus en regard des figures 1 à 6, l'engreneur illustré est formé de deux parties d'engreneur accolées de façon symétrique par rapport à un plan. Cependant, il est bien évident qu'un tel engreneur peut ne comporter qu'une des deux parties représentées sur les figures 1 à 6.

A titre d'exemple, la figure 7 représente un mode de réalisation d'un engreneur 50 apte à coopérer avec une entré 51 d'un convoyeur 52 qui se trouve à une extrémité 53 d'une ligne de coupe 54. Cet engreneur 50 fonctionne de la même façon que celui décrit ci-avant.

Le figure 8 représente un autre mode de réalisation d'un engreneur selon l'invention. L'engreneur 60 comprend, à son extrémité 61, un releveur 62 qui permet de détecter les éventuels obstacles qui pourraient se trouver devant l'engreneur quand la moissonneuse avance dans les plantations, comme, par exemple, des mottes de terre, des pierres ou analogues, et d'éviter que ces obstacles ne détériorent l'extrémité 61 ou n'endommagent les différentes surfaces dont les fonctions ont été definies ci-avant. Ce releveur est constitué d'une surface courbe formant un patin de glissement 64 se relevant à son extrémité avant.

Cet engreneur comporte évidemment des moyens de fixation 65 sur la machine 1. Ces moyens de fixation sont constitués, par exemple, par au moins une patte glissière 66 apte à venir se positionner sur un doigt 68 de la barre du support 69 de la lame de coupe 70 définie ci-avant et par un boulon 67 pouvant se fixer dans une partie écrou solidarisant la patte 66 avec la barre de coupe 69. La patte glissière 66 est avantageusement reliée à la surface renflée convexe 71 par un axe de rotation 72 situé sur une de ses extrémités et par des moyens de liaison de longueur variable 73, à l'autre extrémité. Ces moyens 73 peuvent être, par exemple, un ressort de traction exerçant son effort entre la patte 66 et la surface 71. Cependant, dans une réalisation pouvant, dans certains cas, présenter un avantage, ces moyens peuvent être constitués par un vérin 74 de type mécanique ou fluidique, ou analogue, comprenant une tige 75 et un cylindre 76 dont la longueur peut être commandée, par exemple par le chauffeur de la machine, en fonction de différents paramètres, pour adapter la position de l'engreneur par rapport aux moyens de coupe et obtenir son meilleur fonctionnement, notamment en fonction des plantes à couper, de la nature du terrain, des conditions de surface, etc. La tige 75 est liée, par exemple, à la patte 66, tandis que le cylindre 76 est fixé à la surface 71.

L'engreneur peut être obtenu par moulage ou autre technique, dans des matériaux comme de la fibre de verre polyester lisse, ou même en matériau métallique.

**Revendications**

1. Engreneur pour machine (1) comme une moissonneuse, éventuellement batteuse, apte à se déplacer suivant une direction d'avance (3) et à couper des tiges de plantes (40) dont le port est sensiblement vertical, ladite machine comportant des moyens de coupe (7) desdites tiges suivant une ligne (8) faisant un angle non nul avec ladite direction d'avance, des moyens (12) pour rassembler les tiges coupées, les déplacer dans un flux (13) suivant une direction (14) faisant un angle non nul avec ladite direction d'avance et les amener à une bouche d'entrée (15) de traitement, ledit engreneur (2) comportant en outre des moyens (21) pour décaler latéralement un ensemble des tiges se trouvant devant ladite bouche d'entrée et des moyens (26) pour guider ledit flux complété par ledit ensemble de tiges décalées vers ladite bouche d'entrée (15), cesdits moyens de décalge (21) étant constitués par une première paroi (22) définie sensiblement dans un plan dans lequel sont sensiblement disposées les tiges des plantes à couper, ledit plan faisant un angle aigu (23) par rapport à ladite direction d'avance (3), ledit engreneur étant caractérisé par le fait qu'il comporte en outre des moyens (24) pour incliner lesdites tiges décalées suivant une orientation sensiblement dans la direction (14) du déplacement dudit flux et pour les envoyer sur ledit flux avant son entrée dans ladite bouche d'entrée (15), cesdits moyens d'inclinaison des tiges étant constitués par une deuxième paroi (25) continuant ladite première paroi (22) et prenant progressivement une inclinaison par rapport à la direction dudit plan de ladite première paroi (22), en s'écartant de l'axe de la direction d'avance (3).

2. Engreneur selon la revendication 1, caractérisé par le fait que lesdits moyens de guidage (26) sont constitués par une troisième paroi (27) partant du point de ladite deuxième paroi (25) le plus éloigné de l'axe de la direction d'avance (3), pour se terminer vers la bouche d'entrée, sensiblement sur ledit axe (3).

3. Engreneur selon l'une des revendications 1 et 2, caractérisé par le fait qu'il comporte en outre des moyens pour comprimer le flux des tiges de plantes avant qu'il ne pénètre dans ladite bouche d'entrée (15).

4. Engreneur selon les revendications 2 et 3, caractérisé par le fait que ladite troisième paroi (27) est conformée en surface convexe formant entonnoir pour ledit flux (13).

5. Engreneur selon l'une des revendications 1 à 4, caractérisé par le fait qu'il comprend, à l'extrémité (61) de ladite première paroi, un releveur (62).

6. Engreneur selon la revendication 5, caractérisé par le fait que ledit releveur est constitué par une quatrième paroi courbe formant patin de glissement (64) se relevant à son extrémité avant.

7. Engreneur selon l'une des revendications 1 à 6, caractérisé par le fait qu'il comporte des moyens de fixation (65) sur la machine (1).

8. Engreneur selon la revendication 7, caractérisé par le fait que, lesdits moyens de coupe étant constitués par une barre (69) comportant des doigts (68) de séparation des tiges de plantes et supportant une lame de coupe (70), lesdits moyens de fixation (65) comportent au moins une patte glissière (66) apte à venir se positionner sur au moins un desdits doigts (68) de ladite barre (69), et un moyen de solidarisation (67) avec ladite patte (66).

9. Engreneur selon la revendication 8, caractérisé par le fait que ladite patte glissière (66) est reliée à l'une (71) desdites première, deuxième et troisième parois (22,25,27) par un axe de rotation (72) situé à une de ses extrémités et par des moyens de liaison (73) de longueur variable à son autre extrémité.

10. Engreneur selon la revendication 9, caractérisé par le fait que lesdits moyens de liaison (73) sont constitués par un vérin (74) commandable comprenant une tige (75) et un cylindre (76), l'un de ces deux éléments étant lié à ladite patte (66) et l'autre à l'une desdites parois (22,25,27).

**Claims**

1. Row crop attachment for machine (1) such as a reaper, possibly thresher, which is capable of moving along a direction (3) of propagation and of cutting stems of plants (40) which have substantially vertical growth, with said machine comprising means for cutting (7) said stems along a line (8) making a non-zero angle with said direction of propagation, means (12) for collecting the cut stems, moving them in a flux (13) along a direction (14) making a non-zero angle with said direction of propagation and bringing them to an entrance opening (15) for treatment, said row crop attachment (2) comprising means (21) for laterally displacing an assembly of stems located in front of said entrance opening and means (26) for guiding said flux completed by said assembly of laterally displaced stems towards said entrance opening (15), with said means (21) for laterally displacing being constituted by a first wall (22) defined substantially in a plane in which the stems of plants to be cut are substantially arranged, said plane making an acute angle (23) in relation to said direction of propagation (3),

    said row crop attachment being characterized by the fact that it comprises besides means (24) for inclining the laterally displaced stems into a direction substantially in the direction (14) of movement of said flux and for sending them onto said flux befor its entry into said entrance opening (15), with said means for inclining the stems being constituted by a second wall (25) extending said first wall (22) and becoming progressively inclined in relation to the direction of said plane of said first wall (22), by diverging from the axis of the direction of propagation (3).

2. Row crop attachment in accordance with claim 1, characterized by the fact that said guiding means (26) are constituted by a third wall (27) starting from the point of said second wall (25) which is the farthest from the axis of the direction of propagation (3) and ending towards the entrance opening, substantially on said axis (3).

3. Row crop attachment in accordance with one of claims 1 and 2, characterized by the fact that it comprises besides means for compressing the flux of stems of plants before said flux enters into said entrance opening (15).

4. Row crop attachment in accordance with claims 2 and 3, characterized by the fact that said third wall (27) is conformed with a convex surface forming a funnel for said flux (13).

5. Row crop attachment in accordance with one of claims 1 to 4, characterized by the fact that it comprises a lifter (62) at the end (61) of said first wall.

6. Row crop attachment in accordance with claim 5, characterized by the fact that said lifter is composed of a fourth curved wall forming a slide block (64) which is raised up at its front end.

7. Row crop attachment in accordance with claims 1 to 6, characterized by the fact that it comprises fixing means (65) onto machine (1).

8. Row crop attachment in accordance with claim 7, characterized by the fact that, since said cutting means are composed of a bar (69) comprising fingers (68) for separating the stems of plants and supporting a cutting blade (70), said fixing means (65) comprise at least one slider foot (66) capable of positioning itself on at least one of said fingers (68) of said bar (69), and connecting means (67) with said slider foot (66).

9. Row crop attachment in accordance with claim 8, characterized by the fact that said slider foot (66) is connected to one (71) of said first, second and third walls (22,25,27) by an axis of rotation (72) situated at one of its ends and by variable length connection means (73) at its other end.

10. Row crop attachment in accordance with claim 9, characterized by the fact that said connection means (73) are composed of a controllable jack (74) comprising a stem (75) and a cylinder (76), with one of said two components being connected to said slider foot (66) and the other to one of said walls (22,25,27).

**Patentansprüche**

1. Einleger für Maschine (1), wie eine Mähmaschine, eventuell Dreschmaschine, die in einer Fahrtrichtung (3) verfahrbar ist und zum Schneiden der Halme von Pflanzen (40) ausgebildet ist, deren Wuchsrichtung im wesentlichen vertikal ist, welche Maschine Schneidmittel (7) für die Halme gemäß einer Linie (8), die unter einem von Null verschiedenen Winkel zu der Fahrtrichtung steht, Mittel (12) zum Zusammenfassen der geschnittenen Halme und deren Verlagerung in einen Fluß (13) gemäß einer Richtung (14), die einen von Null verschiedenen Winkel mit der Fahrtrichtung bildet und deren Transport zu einer Einlaßöffnung (15) für die Verarbeitung führt, umfaßt, welcher Einleger (2) ferner Mittel (21) umfaßt zum seitlichen Versetzen einer Gruppe von Halmen, die sich vor der EinlaßÖffnung befinden sowie Mittel (26) umfaßt zum Führen des durch diese verlagerten Halme vervollständigten Flusses in Richtung der Einlaßöffnung (15), welche Verlagerungsmittel (21) von einer ersten Wandung (22) gebildet werden, definiert im wesentlichen in einer Ebene, in der im wesentlichen die Halme der zu schneidenden Pflanzen befindlich sind, welche Ebene einen spitzen Winkel (23) relativ zur Fahrtrichtung (3) bildet, welcher Einleger dadurch gekennzeichnet ist, daß er ferner Mittel (24) umfaßt zum Schrägstellen der verlagerten Halme gemäß einer Orientierung im wesentlichen in der Richtung (14) der Verlagerung des Flusses und für deren Zufuhr zu dem Fluß vor dessen Eintritt in die Einlaßöffnung (15), welche Halmschrägstellmittel von einer zweiten Wandung (25) gebildet werden, welche die erste Wandung (22) fortsetzt und progressiv eine Neigung zur Richtung der Ebene der ersten Wandung (22) annimmt, wobei sie sich von der Achse der Fahrtrichtung (3) entfernt.

2. Einleger nach Anspruch 1, dadurch gekennzeichnet, daß die Führungsmittel (26) von einer dritten Wandung (27) gebildet werden, der vom Punkt der zweiten Wandung (25) ausgeht, der am weitesten von der Achse der Fahrtrichtung (3) entfernt ist, um in Richtung der Einlaßöffnung im wesentlichen auf der Achse (3) zu enden.

3. Einleger nach einem der Ansprüche 1 und 2, dadurch gekennzeichnet, daß er ferner Mittel umfaßt zum Komprimieren des Flusses der Pflanzenhalme, bevor er den Einlaß (15) durchsetzt.

4. Einleger nach Ansprüchen 2 und 3, dadurch gekennzeichnet, daß die dritte Wandung (27) mit einer konvexen Oberfläche, die einen Trichter für den Fluß (13) bildet, versehen ist.

**5.**  Einleger nach einem der Ansprüche 1 bis 4, dadurch gekennzeichnet, daß er am Ende (61) der ersten Wandung einen Heber (62) besitzt.

**6.**  Einleger nach Anspruch 5, dadurch gekennzeichnet, daß der Heber von einer vierten gekrümmten Wandung gebildet wird, die einen Gleitschuh (64) bildet, der sich an seinem vorderen Ende anhebt.

**7.**  Einleger nach einem der Ansprüche 1 bis 6, dadurch gekennzeichnet, daß er Befestigungsmittel (65) auf der Maschine (1) umfaßt.

**8.**  Einleger nach Anspruch 7, dadurch gekennzeichnet, daß, während die Schneidmittel von einer Stange (69) mit Fingern (68) für die Separation der Pflanzenhalme und zur Abstützung einer Schneide (70) gebildet werden, die Befestigungsmittel (75) mindestens einen Gleitschuh (66) umfassen, der auf mindestens einem der Finger (68) der Stange (69) positionierbar ist sowie ein Verbindungsmittel (67) mit dem Gleitschuh (66).

**9.**  Einleger nach Anspruch 8, dadurch gekennzeichnet, daß der Gleitschuh (66) mit einer (71) der ersten, zweiten und dritten Wandungen (22, 25, 27) über eine Rotationsachse (72) verbunden ist, die an einem ihrer Enden angeordnet ist sowie mittels Verbindunsmitteln (73) variabler Länge an ihrem anderen Ende.

**10.**  Einleger nach Anspruch 9, dadurch gekennzeichnet, daß die Verbindungsmittel (73) von einem steuerbaren Arbeitszylinder (74), umfassend eine Kolbenstange (75) und einen Zylinder (76) gebildet sind, wobei eines dieser beiden Elemente mit dem Gleitschuh (66) und das andere mit einer der Wandungen (22, 25, 27) verbunden sind.

fig.1.

fig.6

fig.2

fig.3

fig.4

fig.5

fig.7

**53**

**54**

**50**

**51**

**52**

**67**

**71** **74** **73** **76** **60** **61** **62**

**72** **66** **65** **75** **64**

**69** **70** **68**

fig.8